# EUROPÄISCHE PATENTSCHRIFT

(11) **EP 4 453 132 B1**
(45) Veröffentlichungstag und Bekanntmachung des Hinweises auf die Patenterteilung: **03.12.2025**
(21) Anmeldenummer: 22843661.4
(22) Anmeldetag: 20.12.2022
(51) Int. Cl.: C10B 53/02, C10B 3/02

(54) **PYROLYSEVERFAHREN UND PYROLYSEVORRICHTUNG ZUR HERSTELLUNG VON PYROLYSEGAS UND PYROLYSEKOKS**
PYROLYSIS METHOD AND PYROLYSIS DEVICE FOR PRODUCING PYROLYSIS GAS AND PYROLYSIS COKE
PROCÉDÉ DE PYROLYSE ET DISPOSITIF DE PYROLYSE POUR LA PRODUCTION DE GAZ DE PYROLYSE ET DE COKE DE PYROLYSE

(30) Priorität: 20.12.2021 DE 102021133899
(43) Veröffentlichungstag der Anmeldung: 30.10.2024
(73) Patentinhaber: Fraunhofer-Gesellschaft zur Förderung der angewandten Forschung e.V., 80686 München (DE)
(72) Erfinder: ARTMANN, Michael, 93185 Michelsneukirchen (DE); APFELBACHER, Andreas, 92237 Sulzbach-Rosenberg (DE); DASCHNER, Robert, 92237 Sulzbach-Rosenberg (DE)
(74) Vertreter: Maiwald GmbH
(86) Internationale Anmeldenummer: PCT/EP2022/087094
(87) Internationale Veröffentlichungsnummer: WO 2023/118213

(56) Entgegenhaltungen:
- WO-A1-96/32163
- JP-B1- 5 603 477

## Beschreibung

### Technisches Gebiet

Die Erfindung betrifft Pyrolyseverfahren und Pyrolysevorrichtungen.

### Hintergrund

Ein Verfahren zur Herstellung von Pyrolyseöl bei Prozesstemperaturen ist aus der DE102015108552 bekannt. Das beschriebene Verfahren umfasst einen Pyrolyseschritt und einen Reformierungsschritt bei 600 bis 750°C in Anwesenheit einer Katalysatorschüttung, insbesondere einer Katalysatorschüttung aus frisch gebildetem pyrolysiertem Feststoff. In dem Verfahren wird zu behandelnde Feststoff von oben in ein Reaktorrohr gefüllt und der pyrolysierte Feststoff aus dem Reaktorrohr nach unten abgeführt während die Pyrolysegase durch eine Innenrohr zur Nachbehandlung abgeführt werden.

DE102014105340 offenbart ein Verfahren zur Herstellung von Pyrolyseöl mit Hilfe eines röhrenförmigen Reaktors wobei die Längsachse dieses Reaktors in Bezug auf die Horizontalebene in einem Winkel von maximal 45° geneigt ist und das zu pyrolysierende Material von einer Förderschnecke durch den Reaktor befördert wird.

DE102016115700 offenbart ebenfalls ein Pyrolyseverfahren mit einem Reformierungsschritt bei 600 bis 750°C. Als besonders geeignet werden mittlere Partikelgrößen des festen fossilen Brennstoffs von 3 bis 30 mm bezeichnet. Die Verwendung von biogenem Material ist in der DE102016115700 nur neben fossilem Brennstoff vorgesehen. Zum Transport des zu behandelnden Materials werden Förderbänder oder Förderschnecken, insbesondere Einwellenextruder eingesetzt.

Die bekannten Verfahren führen zu relativ großen und wenig kompakten Anlagen. Es war daher die Aufgabe ein Verfahren und Anlage bereitzustellen, die Pyrolyseöl lierfert aber überaus kompakt baut und auch weitere im Stand der Technik benannte Nachteile wie Ablagerungen und Verblockungen insbesondere beim Einsatz von Filtern zur Aufreinigung der Pyrolysegase vermeidet. Aufgabe war ferner ein Verfahren bereitzustellen, dass einen relativ hohen Anteil an Feinfraktion (bezogen auf den Einsatzstoff) tolerieren kann. Weitere Beispiele aus dem Stand der Technik finden sich in den Offenlegungen von WO 96/32163 A1 und JP 5 603477 B1.

### Kurzfassung

Die vorliegende Erfindung beruht auf der Erkenntnis, dass diese Nachteile durch das Bereitstellen von Biomasse mit einem Wassergehalt von unter 30 Gew.-% in stückiger Form, wobei der mittlere Teilchendurchmesser D₅₀ der stückigen Biomasse zwischen 2.0 mm und 60 mm liegt (bestimmt gemäß ASTM E112) in Kombination mit einer Pyrolysevorrichtung umfassend einen im Wesentlichen vertikal angeordneten Reaktorraum, wobei der Reaktorraum im wesentlichen zylinderförmig oder im Wesentlichen konisch ist, sowie mit einer Fördereinrichtung zum Transport der Biomasse in stückiger Form von unten nach oben durch den Reaktorraum, ferner Zuführen der Biomasse in stückiger Form von unten nach oben durch den Reaktorraum so dass eine Schüttung innerhalb des Reaktorraums vorliegt, vermieden werden können.

Die vorliegende Erfindung stellt insofern bereit:
eine Pyrolyseverfahren zur Herstellung von Pyrolysegas und Pyrolysekoks umfassend die folgenden Schritte:
a) Bereitstellen von Biomasse mit einem Wassergehalt von unter 30 Gew.-% in stückiger Form, wobei der mittlere Teilchendurchmesser D₅₀ der stückigen Biomasse zwischen 2.0 mm und 60 mm liegt bevorzugt bestimmt gemäß ASTM E112;
b) Bereitstellen einer Pyrolysevorrichtung umfassend
   i) einen im Wesentlichen vertikal angeordneten Reaktorraum, wobei der Reaktorraum im Wesentlichen zylinderförmig oder im Wesentlichen konisch ist,
   ii) eine Fördereinrichtung zum Transport der Biomasse in stückiger Form von unten nach oben durch den Reaktorraum;
   iii) eine Beheizungseinrichtung für den Reaktorraum;
   iv) eine Zuführung für ein Beheizungsmedium in die Beheizungseinrichtung von oben sowie einer Abführung dieses Beheizungsmediums, so dass das Beheizungsmedium im Gegenstrom bezogen auf die Biomasse geführt wird;
   v) einen Auslass für die Pyrolysegase im oberen Bereich des Reaktorraums;
   vi) optional eine Entstaubungseinrichtung für die Pyrolysegase;
   vii) eine Austragseinrichtung für den Pyrolysekoks;
   viii) optional eine Abführungseinrichtung für abgeschiedene Staubpartikel;
c) Zuführen der Biomasse in stückiger Form von unten nach oben durch den Reaktorraum so dass eine Schüttung innerhalb des Reaktorraums vorliegt;
d) Aufheizen der Biomasse in stückiger Form mit einer Aufheizrate von 0.3 bis 5 K/s;
e) Pyrolysieren der Biomasse in stückiger Form im Wesentlichen unter Abwesenheit von Sauerstoff bei einer Temperatur von 400 bis 750°C, bevorzugt 450 bis 650°C, für 5 bis 60 Minuten;
f) Abführen der Pyrolysegase aus dem Reaktor und optional Zuführung in die Entstaubungseinrichtung;
g) optional Abtrennen von Staubpartikeln und Abführen derselben
h) Abführen des erhaltenen Pyrolysekoks;
i) Abführen des Pyrolysegases
j) optionales Bereitstellen von Pyrolyseöl durch anteiliges Kondensieren des abgeführten Pyrolysegases.

Ferner stellt die vorliegende Erfindung
eine Pyrolysevorrichtung umfassend
   i) einen im Wesentlichen vertikal angeordneten Reaktorraum, wobei der Reaktorraum im Wesentlichen zylinderförmig und/oder im Wesentlichen konisch ist,
   ii) eine Fördereinrichtung geeignet zum Transport von Biomasse in stückiger Form von unten nach oben durch den Reaktorraum so dass eine Schüttung der Biomasse bereitgestellt wird;
   iii) eine Beheizungseinrichtung für den Reaktorraum
   iv) eine Zuführung für ein Beheizungsmedium in die Beheizungseinrichtung von oben sowie einer Abführung dieses Beheizungsmediums so dass das Beheizungsmedium im Gegenstrom bezogen auf die Biomasse geführt wird; einen Auslass für die Pyrolysegase im oberen Bereich des Reaktorraums;
   v) optional eine Entstaubungseinrichtung für Pyrolysegase;
   vi) eine Austragseinrichtung für Pyrolysekohle;
   vii) optional eine Abführungseinrichtung für abgeschiedene Staubpartikel,
wobei die Fördereinrichtung eine Förderschnecke ist, welche 80 bis 95% der Querschnittsfläche des Reaktorraums bezogen auf die Innenmaße des Reaktorraums einnimmt.

Biomasse mit einem Wassergehalt von unter 30 Gew.-% ist bekannt und ist nicht beschränkt. Biogene Reststoffe aller Art kommen in Frage. Gegebenenfalls wird eine Trocknung durchgeführt. Damit können auch biogene Reststoffe wie Klärschlamm pyrolysiert werden.

Der mittlere Teilchendurchmesser D₅₀ der stückigen Biomasse zwischen 2.0 mm und 60 mm bevorzugt bestimmt gemäß ASTM E112 kann durch bekannte Vorbehandlungsschritte sichergestellt werden. Es ist insbesondere bevorzugt, dass die Feinfraktion, d.h. D₁₀ Fraktion nur in einer Gewichtsprozentmenge von unter 30 vorliegt (bezogen auf alle Teilchen). Unter Umständen ist es notwendig zum Beispiel mittels Siebtrennung die mittlere Größe und die Menge der Feinfraktion einzustellen. Bevorzugt liegt die D₁₀ Fraktion bei 10 bis 30 Gew.-%.. Es ist ein großer Vorteil des vorliegenden Verfahrens, dass auch relativ große Feinfraktionsmengen, d.h. zum Beispiel D₁₀ von z.B. 10 bis 25 Gew.-% bezogen auf alle Teilchen, eingesetzt werden können.

Der Reaktorraum (1) ist im Wesentlichen vertikal angeordnet. Dies bedeutet, dass Abweichungen von exakt vertikaler Ausrichtung um bis zu 40° möglich sind. Es ist bevorzugt, dass die Abweichung von exakt vertikaler Ausrichtung weniger als 20° beträgt. Ferner ist der Reaktorraum im wesentlichen zylinderförmig und/oder im Wesentlichen konisch. Im wesentlichen zylinderförmig bedeutet, dass Abweichungen von einer kreisförmigen Querschnittsfläche möglich sind. In der im wesentlichen konischen Ausführungsform nimmt die Querschnittsfläche des Reaktorraums von unten nach oben zu. Es ist auch möglich und auch bevorzugt, dass der Reaktorraum im mittleren und unteren Teil im Wesentlichen zylinderförmig ist und im oberen Teil im Wesentlichen konisch ist. Besonders bevorzugt nimmt in der Ausführungsform "mittlerer und unter Teil zylindrisch und oberer Teil konisch", der mittlere und untere Teil eine Höhe von 60 bis 85 % der Gesamthöhe des Reaktorraumes ein.

Eine weitere Variable zur Beeinflussung der Verweilzeit ist die Drehzahl der Fördereinrichtung.

Eine Fördereinrichtung wird zum Transport der Biomasse in stückiger Form von unten nach oben durch den Reaktorraum eingesetzt. Dies ist normalerweise eine Förderschnecke. Erfindungsgemäß nimmt die Förderschnecke 80 bis 95% der Querschnittsfläche des Reaktorraums (bezogen auf die Innenmaße) ein. Damit ist sichergestellt, dass ein Teil der Biomasse in stückiger Form an der Mantelinnenfläche des Reaktors schwerkraftgetrieben nach unten rutschen kann. Dies stellt eine gute Durchmischung sicher. Als Fläche, welche von der Förderschnecke eingenommen wird, wird die Bruttofläche der Förderschnecke inklusive der Seele und ggf. weiterer Einrichtungen betrachtet. Der verbleibende Ringraum beträgt also 5 bis 20% bezogen auf die Querschnittsfläche des Reaktorinnenraums. Im Falle von konischer Reaktorform gilt die mittlere Querschnittsfläche (arithmetisches Mittel) entsprechend, d.h. betrachtet werden die Querschnittflächen des Reaktors, welche im Bereich der Förderschnecke vorliegen.

Gewöhnlicher Weise wird die Förderschnecke den Reaktorraum vertikal nicht ausfüllen, sondern nur zu etwa 60 bis 85% der Gesamtinnenhöhe des Reaktorraums. Es sind aber auch Ausführungsformen möglich in welchen die Förderschnecke vollständig durch den Reaktorraum ragt. Üblicherweise wird die Höhe der Fördereinrichtung so gewählt, dass sich darüber eine Schüttung der Biomasse in stückiger Form ausbildet. Mit anderen Worten, oberhalb der Förderschnecke bildet sich eine Anhäufelung in Form einer Schüttung aus. Es versteht sich von selbst, dass die Schüttung den ganzen übrigen unterhalb liegenden Reaktorraum, insbesondere den oben diskutiereten Ringraum ausfüllt. Zur Sicherstellung von pyrolysetauglichen Temperaturen und zur Bereitstellung entsprechender Wärmemengen ist eine Beheizungseinrichtung für den Reaktorraum vorhanden. Es versteht sich von selbst, dass die Beheizung indirekt erfolgt. Gewöhnlicherweise werden die Reaktorwände zumindest zum Teil beheizt werden. Die Erwärmung der Biomasse in stückiger Form erfolgt also durch Wärmeeintrag von außen: es liegt also kein direkter Kontakt der Biomasse in stückiger Form mit dem Beheizungsmedium vor.

Zusätzlich und bevorzugt kann auch noch eine Beheizungseinrichtung innerhalb der Fördereinrichtung vorhanden sein, d.h. die Fördereinrichtung kann optional auch beheizt werden.

Über eine Zuführung (5) wird ein Beheizungsmedium in die Beheizungseinrichtung von oben zugeführt und über eine Abführung (6) wird dieses Beheizungsmediums aus der Beheizungseinrichtung abgeführt. Damit wird das Beheizungsmedium im Gegenstrom bezogen auf die Biomasse geführt. Das Heizungsmedium kann gasförmig sein. Alternativ kann das Heizungsmedium ein Flüssigmetall bzw. eine Flüssigmetalllegierung sein. In einer bevorzugten Ausführungsform ist das Heizungsmedium eine flüssige Salzschmelze.

Die Biomasse in stückiger Form wird mit einer Aufheizrate von 0.3 bis 5 K/s, d.h. relativ schnell aufgeheizt. Anschließend wird pyrolysiert im Wesentlichen unter Abwesenheit von Sauerstoff bei einer Temperatur von 400 bis 750°C, bevorzugt 450 bis 650°C, für 5 bis 60 Minuten. Der Temperaturbereich von 400 bis 750°C bedeutet, dass die Pyrolysetemperatur innerhalb dieses Bereichs liegt. Die Schüttung wird also im oberen Bereich, bevorzugt insbesondere in der Anhäufelung oberhalb der Förderschnecke eine Temperatur aus diesem Bereich aufweisen.

Höhere Temperaturen als 750°C sollten unbedingt vermieden werden. Verkokungsprobleme sind sonst nicht auszuschließen.

Optional und bevorzugt ist eine Entstaubungseinrichtung (8) für die Pyrolysegase vorhanden. Bevorzugt wird ein Zyklon eingesetzt. Zusätzlich oder alternativ können Heißgas-Filter zum Einsatz kommen.

Es ist besonders bevorzugt, dass die Entstaubungseinrichtung (8) innerhalb des Reaktorraumes (1), ganz besonders bevorzugt am oberen Ende des Reaktorraumes angeordnet ist. Dies hat den großen Vorteil, dass eine Beheizung der Entstaubungseinrichtung zusammen mit der Beheizung des Reaktorraums erfolgt, d.h. diese Integrallösung führt zu einer Vereinfachung und zu größerer Kompaktheit. Ein weiterer Vorteil ergibt sich daraus, dass die abgeschiedenen Stäube direkt mit dem Pyrolysekoks abgeführt werden können, d.h. erneut ist keine separate Abführung nötig, also die Kompaktheit maximiert.

In einer alternativen Ausführungsform kann die Entstaubungseinrichtung aber auch außerhalb des Reaktorraums angeordnet sein.

Der erhaltene Pyrolysekoks wird abgeführt, vorteilhafterweise schwerkraftgetrieben. Besonders bevorzugt ist es den erhaltenen Pyrolysekoks mit den abgetrennten Staubpartikeln zu vereinigen. Wie oben erläutert ist dies besonders einfach möglich, wenn die Eintstaubungseinrichtung am oberen Ende des Reaktorraums angeordnet ist.

Durch gegebenenfalls anteiliges Kondensieren wird das Pyrolyseöl aus dem Pyrolysegas gewonnen.

Dabei kann bevorzugt das Pyrolyseöl durch anteiliges Kondensieren des abgeführten Pyrolysegases als ein Zweiphasengemisch aus Pyrolyseöl und Wasser erhalten werden. Die Auftrennung des Zweiphasengemisches kann zum Beispiel durch Absaugung der Phasen erfolgen. Die Phasengrenze kann durch übliche Messgrößen wie Leitfähigkeit, Brechungsindex und dergleichen bestimmt werden.

Vorteilhafterweise wird die Pyrolysekohle schwerkraftgetrieben ausgetragen.

Dies ermöglicht eine besonders kompakte Bauweise, weil weitere Förderelemente nicht benötigt werden. Die Kompaktheit wird noch unterstützt, wenn die abgetrennten Staubpartikel mit der Pyrolysekohle zusammengeführt werden, was bevorzugt ist.

Wenn die Entstaubungseinrichtung außerhalb des Reaktorraums vorgesehen ist, kann die Austragsleitung für die Stäube auch mit der Austragsleitung für die Pyrolysekohle vereinigt werden.

Im Verfahren gemäß der vorliegenden Erfindung erfolgt das Zuführen der Biomasse in stückiger Form von unten nach oben durch den Reaktorraum bevorzugt mit einer Förderschnecke und besonders bevorzugt bei 0.5 bis 20 Umdrehungen pro Minute.

Im Verfahren der vorliegenden Erfindung werden die Pyrolysegase bevorzugt durch die Schüttung der Biomasse in stückiger Form vorgereinigt.

Beim Verfahren gemäß der vorliegenden Erfindung nimmt die Schneckensteigung der Förderschnecke von oben nach unten bevorzugt ab. Das heißt, dass die Abstände zwischen den Schneckenblättern in dieser Richtung kleiner wird. Damit wird ein Gradient bezogen auf die Packungsdichte der Schüttung erzeugt: im oberen Bereich ist die Dichte der Schüttung niedriger verglichen mit der Packungsdichte im unteren Bereich. Auf diese Art und Weise werden Druckanstiege im Reaktonsbereich vermieden.

Die Schüttungshöhe im Reaktorraum wird so gewählt, dass eine Verweilzeit der Biomasse innerhalb des Reaktorraums bei einer Temperatur von 400 bis 750°C, bevorzugt 450 bis 650°C von 5 bis 60 Minuten erreicht wird.

Es ist bevorzugt eine kontinuierliche Durchmischung der Biomasse und insbesondere der Schüttung derselben im Reaktorraum sicherzustellen. Besonders bevorzugt wird die kontinuierliche Durchmischung der Biomasse in stückiger Form mittels der Fördereinrichtung bereitgestellt, d.h. die Fördereinrichtung dient gleichzeitig zur Förderung als auch zur Durchmischung.

Die Fördereinrichtung ist bevorzugt so gestaltet ist, dass die Biomasseschüttung zum Teil von oben nach unten durchmischt wird, besonders bevorzugt, dass die Biomasseschüttung sich mantelflächennah, insbesondere sich mantelflächennah und schwerkraftgetrieben vertikal zum Teil nach unten bewegen kann.

Das Verfahren gemäß der vorliegenden Erfindung eignet sich auch zur Wasserstoffproduktion aus dem Pyrolysegas. Die Wasserstoffmenge kann maximiert werden, indem zusätzlich Wasser eingeführt wird.

In der hier beschriebenen Pyrolysevorrichtung ist bevorzugt ein externe Beheizung vorgesehen, wobei bevorzugt die Außenabschlussfläche des Reaktors oder zusätzlich die Fördereinrichtung beheizt wird. Externe Beheizung bedeutet, dass die Wärme von anderen Vorrichtungen und Prozessen zugeführt wird. Üblicherweise wird man Synthesegas oder Abwärme aus anderen Hochtemperaturprozessen einsetzen. Es ist möglich und auch bevorzugt, dass Wärmerückgewinnung aus dem Wärmestrom welcher nach der Beheizung des Reaktors und/oder Beheizung der Fördereinrichtung verbleibt, erfolgt. Die noch vorhandene Wärme kann vorteilhaft zur Luftvorwärmung in einem gekoppelten Prozess eingesetzt werden.

Die Wärmeübertragung zur Beheizung des Reaktors und/oder der Fördereinrichtung kann entweder direkt erfolgen, oder ein weiterer Wärmeüberträger wie eine flüssiges Salzschmelze oder ein Flüssigmetall oder eine Flüssigmetalllegierung können eingesetzt werden. Entsprechendes gilt für die Wärmerückgewinnung.

Zur Reaktorbeheizung wird das Heizungsmedium bevorzugt von oben zugeführt um Gegenstromverhältnisse (bezogen auf Heizungsmedium versus Biomasse) sicherzustellen.

Ferner offenbart wird hier die Verwendung des Verfahren und/oder der Vorrichtung zur Herstellung von Biokoks, Aktivkohle und/oder Grillkohle.

### Detaillierte Beschreibung

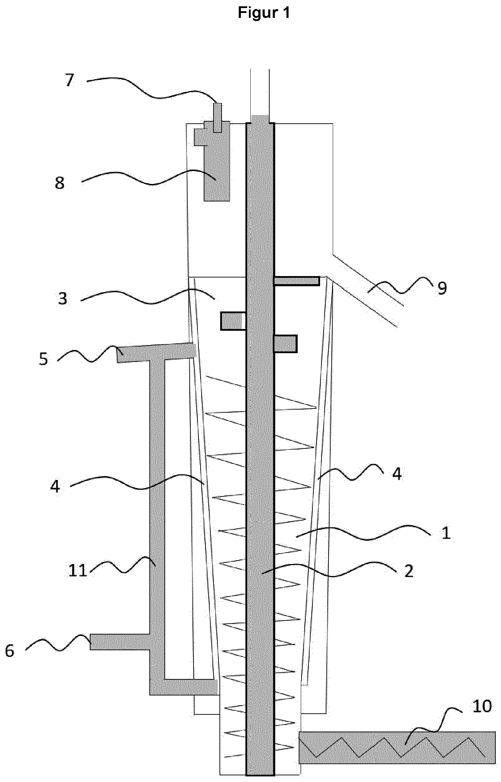

Im Folgenden werden bevorzugte Ausführungsformen mit Bezug auf Figur 1 beschrieben.

Figur 1 zeigt den Schnitt durch eine Pyrolysevorrichtung gemäß der vorliegenden Erfindung.

### Bezugszeichenliste:

- 1: vertikal angeordneten Reaktorraum (zylindrisch und/oder konisch)
- 2: Fördereinrichtung (Förderschnecke) zum Transport der Biomasse in stückiger Form von unten nach oben durch den Reaktorraum
- 3: Schüttung Biomasse
- 4: Beheizeinrichtung
- 5: Zuführung für ein Beheizungsmedium in die Beheizungseinrichtung von oben
- 6: Abführung für das Beheizungsmediums
- 7: Auslass für die Pyrolysegase
- 8: Entstaubungseinrichtung für Pyrolysegase
- 9: Austragseinrichtung für Pyrolysekohle (und abgeschiedene Staubpartikel)
- 10: Eintrag Biomasse
- 11: Rekuperator (zur Luft-Vorwärmung aus Abluft)

In der gezeigten Ausführungsform ist der Reaktorraum (1) konisch. Der Reaktorraum weist eine innenliegende Förderschnecke (2) auf. Mit Hilfe dieser Förderschnecke wird die Biomasse von unten nach oben transportiert und auch gleichzeitig durchmischt bzw. gelockert. Die Biomasse liegt in Form einer losen Schüttung (3) vor. Die Beheizung des Reaktorraums (1) erfolgt über eine Beheizungseinrichtung (4). Diese Beheizungseinrichtung (4) kann als einfache Doppelwandkonstruktion oder auch in Form einer Verrohrung auf oder ggf. in der Reaktorwand ausgebildet sein. Die Zuführung des Beheizungsmediums, z.B. Gas, erfolgt von oben über die Zuführung (5). Das Beheizungsmedium verlässt die Reaktorwand wieder im unteren Bereich des Reaktors. Die Biomasse wird von unten nach oben gefördert, während das Beheizungsmedium von oben nach unten gefördert wird, d.h. die Beheizung erfolgt im Gegenstrom.

Die Förderschnecke (2) füllt den Reaktorraum nicht vollständig aus, sondern nur, bezogen auf die Querschnittsfläche zu 80 bis 95%. Die Biomasse in stückiger Form liegt als Schüttung (3) vor, wobei diese Schüttung (3) fortlaufend durchmischt wird. Die Zuführung der Biomasse in stückiger Form erfolgt über die Einrichtung (10). Ferner dient die Schüttung (3) als Vorfilter für die Pyrolysegase. Im oberen Teil des Reaktorraums befindet sich eine Entstaubungseinrichtung. Die Pyrolysegase werden in diese Entstaubungseinrichtung (8) zugeführt und gereinigt. Die Entstaubungseinrichtung wird bevorzugt als Zyklon ausgeführt. Die abgetrennten Stäube können schwerkraftgetrieben auf die Schüttung fallen und zusammen mit dem erhaltenen Pyrolysekoks abgeführt werden. Zu diesem Zweck ist eine Austragseinrichtung (9) für den Pyrolysekoks vorhanden. Diese ist bevorzugt so ausgebildet, dass der Pyrolysekoks schwerkraftgetrieben abgeführt wird. Es ist besonders vorteilhaft, dass die abgeschiedenen Staubpartikel ebenfalls über diese Austragseinrichtung abgeführt werden können.

### Experimentalteil

Eine Experimentalanlage wurde projektiert und getestet. Es stellte sich heraus, dass keine Verblockungsprobleme auftreten und dass ausgezeichnete Kompaktheit erreicht wird.

## Patentansprüche

1. Pyrolyseverfahren zur Herstellung von Pyrolysegas und Pyrolysekoks umfassend die folgenden Schritte:
a) Bereitstellen von Biomasse mit einem Wassergehalt von unter 30 Gew.-% in stückiger Form, wobei der mittlere Teilchendurchmesser D₅₀ der stückigen Biomasse zwischen 2.0 mm und 60 mm liegt bestimmt gemäß ASTM E112;
b) Bereitstellen einer Pyrolysevorrichtung umfassend
i) einen im Wesentlichen vertikal angeordneten Reaktorraum (1), wobei der Reaktorraum im Wesentlichen zylinderförmig und/oder im Wesentlichen konisch ist,
ii) eine Fördereinrichtung (2) zum Transport der Biomasse in stückiger Form von unten nach oben durch den Reaktorraum;
iii) eine Beheizungseinrichtung (4) für den Reaktorraum;
iv) eine Zuführung (5) für ein Beheizungsmedium in die Beheizungseinrichtung von oben sowie einer Abführung (6) dieses Beheizungsmediums, so dass das Beheizungsmedium im Gegenstrom bezogen auf die Biomasse geführt wird;
v) einen Auslass (7) für die Pyrolysegase im oberen Bereich des Reaktorraums;
vi) eine Austragseinrichtung (9) für Pyrolysekoks oder eine Austragseinrichtung (9) für Pyrolysekoks und abgeschiedene Staubpartikel;
c) Zuführen der Biomasse in stückiger Form von unten nach oben durch den Reaktorraum (1), so dass eine Schüttung (3) innerhalb des Reaktorraums vorliegt;
d) Aufheizen der Biomasse in stückiger Form mit einer Aufheizrate von 0.3 bis 5 K/s;
e) Pyrolysieren der Biomasse in stückiger Form im Wesentlichen unter Abwesenheit von Sauerstoff bei einer Temperatur von 400 bis 750°C für 5 bis 60 Minuten;
f) Abführen der Pyrolysegase aus dem Reaktor;
h) Abführen des erhaltenen Pyrolysekokses;
i) Abführen des Pyrolysegases.

2. Verfahren gemäß Anspruch 1, wobei die Pyrolysevorrichtung ferner umfasst:
vii) eine Entstaubungseinrichtung (8) für die Pyrolysegase.

3. Verfahren gemäß Anspruch 1 oder 2, wobei Schritt h) des Verfahrens ferner umfasst die Zuführung der Pyrolysegase in eine Entstaubungseinrichtung.

4. Verfahren gemäß einem der vorhergehenden Ansprüche, wobei das Verfahren ferner umfasst:
g) Abtrennen von Staubpartikeln und Abführen derselben; wobei Schritt h) ferner umfasst das Abführen des erhaltenen Pyrolysekokses zusammen mit den abgetrennten Staubpartikeln.

5. Verfahren gemäß einem der vorhergehenden Ansprüche, wobei das Verfahren ferner umfasst:
i) Bereitstellen von Pyrolyseöl durch anteiliges Kondensieren des abgeführten Pyrolysegases.

6. Verfahren gemäß einem der vorhergehenden Ansprüche, wobei Schritt e) besteht aus Pyrolysieren der Biomasse in stückiger Form im Wesentlichen unter Abwesenheit von Sauerstoff bei einer Temperatur von 450 bis 650°C, für 5 bis 60 Minuten.

7. Verfahren gemäß einem der vorhergehenden Ansprüche, wobei Pyrolyseöl durch anteiliges Kondensieren des abgeführten Pyrolysegases als ein Zweiphasengemisch aus Pyrolyseöl und Wasser erhalten wird und dieses Zweiphasengemisch aufgetrennt wird.

8. Verfahren gemäß einem der vorhergehenden Ansprüche, wobei die Staubpartikel mittels Zyklon und/oder Heißgas-Filter abgetrennt werden.

9. Verfahren nach einem der vorhergehenden Ansprüche, wobei die Pyrolysekohle schwerkraftgetrieben ausgetragen wird.

10. Verfahren nach einem der vorhergehenden Ansprüche, wobei die abgetrennten Staubpartikel mit der Pyrolysekohle zusammen abgeführt werden.

11. Verfahren nach einem der vorhergehenden Ansprüche, wobei das Zuführen der Biomasse in stückiger Form von unten nach oben durch den Reaktorraum mit einer Förderschnecke erfolgt, bevorzugt bei 0.5 bis 20 Umdrehungen pro Minute.

12. Verfahren gemäß Anspruch 11, wobei die Schneckensteigung der Förderschnecke von oben nach unten abnimmt.

13. Verfahren nach einem der vorhergehenden Ansprüche, wobei die Pyrolysegase durch die Schüttung der Biomasse in stückiger Form vorgereinigt werden.

14. Verfahren nach einem der vorhergehenden Ansprüche, wobei die Schüttung der Biomasse im oberen Bereich des Reaktorraums eine geringere Schüttdichte aufweist als im unteren Bereich des Reaktorraums.

15. Verfahren nach einem der vorhergehenden Ansprüche, wobei die Schüttungshöhe im Reaktorraum so gewählt wird, dass eine Verweilzeit der Biomasse innerhalb des Reaktorraums bei einer Temperatur von 400 bis 750°C, bevorzugt 450 bis 650°C von 5 bis 60 Minuten erreicht wird.

16. Verfahren nach einem der vorhergehenden Ansprüche, wobei eine kontinuierliche Durchmischung der Biomasse in stückiger Form mittels der Fördereinrichtung zum Transport der Biomasse in stückiger Form von unten nach oben durch den Reaktorraum erfolgt.

17. Verfahren gemäß Anspruch 16, wobei die Fördereinrichtung so gestaltet ist, dass die Biomasseschüttung zum Teil von oben nach unten durchmischt wird, bevorzugt, dass die Biomasseschüttung sich mantelflächennah, ganz besonders bevorzugt mantelflächennah und schwerkraftgetrieben vertikal nach unten bewegen kann.

18. Verfahren nach einem der vorhergehenden Ansprüche, wobei Wasserstoff aus dem Pyrolysegas gewonnen wird.

19. Verfahren gemäß Anspruch 18, wobei zusätzlich Wasser eingeführt wird.

20. Pyrolysevorrichtung umfassend
i) einen im Wesentlichen vertikal angeordneten Reaktorraum (1), wobei der Reaktorraum im Wesentlichen zylinderförmig und/oder im Wesentlichen konisch ist,
ii) eine Fördereinrichtung (2) geeignet zum Transport von Biomasse in stückiger Form von unten nach oben durch den Reaktorraum so dass eine Schüttung (3) bereitgestellt wird;
iii) eine Beheizungseinrichtung (4) für den Reaktorraum
iv) eine Zuführung (5) für ein Beheizungsmedium in die Beheizungseinrichtung von oben sowie einer Abführung (6) dieses Beheizungsmediums, so dass das Beheizungsmedium im Gegenstrom bezogen auf die Biomasse geführt wird;
v) einen Auslass (7) für die Pyrolysegase im oberen Bereich des Reaktorraums;
vi) eine Austragseinrichtung (9) für Pyrolysekohle
wobei die Fördereinrichtung eine Förderschnecke ist, welche 80 bis 95% der Querschnittsfläche des Reaktorraums bezogen auf die Innenmaße des Reaktorraums einnimmt.

21. Pyrolysevorrichtung gemäß Anspruch 20, wobei die Pyrolysevorrichtung ferner umfasst:
vii) eine Entstaubungseinrichtung (8) für die Pyrolysegase.

22. Pyrolysevorrichtung gemäß Anspruch 20 oder 21 mit externer Beheizung, wobei bevorzugt die Außenabschlussfläche des Reaktors oder die Außenabschlussfläche des Reaktors und die Fördereinrichtung beheizt werden.

23. Pyrolysevorrichtung gemäß einem der Ansprüche 20, 21, oder 22, wobei das Heizungsmedium von oben zugeführt wird.

24. Pyrolysevorrichtung gemäß einem der Ansprüche 20 bis 23, wobei das Heizungsmedium gasförmig ist oder das Heizungsmedium ein Flüssigmetall bzw. eine Flüssigmetalllegierung ist, oder das Heizungsmedium eine flüssige Salzschmelze ist.

25. Verwendung des Verfahren gemäß Ansprüchen 1 bis 19 und/oder Verwendung der Vorrichtung gemäß Ansprüchen 20 bis 24 zur Herstellung von Biokoks, Aktivkohle und/oder Grillkohle.

## Claims

1. A pyrolysis process for production of pyrolysis gas and pyrolysis coke, comprising the following steps:
a) providing biomass with a water content of below 30% by weight in chunk shape, where the median particle diameter D₅₀ of the biomass in chunk shape is between 2.0 mm and 60 mm, determined according to ASTM E112;
b) providing a pyrolysis apparatus comprising
i) a reactor space (1) in an essentially vertical arrangement, where the reactor space is essentially cylindrical and/or essentially conical,
ii) a conveying unit (2) for transporting the biomass in chunk shape from the bottom upward through the reactor space;
iii) a heating unit (4) for the reactor space;
iv) a feed (5) for a heating medium into the heating unit from the top and a drain (6) for said heating medium, such that the heating medium is conducted in countercurrent based on the biomass;
v) an outlet (7) for the pyrolysis gases in the upper region of the reactor space;
vi) a discharge unit (9) for pyrolysis coke or a discharge unit (9) for pyrolysis coke and separated dust particles;
c) feeding the biomass in chunk shape from the bottom upward through the reactor space (1), such that there is a bulk (3) within the reactor space;
d) heating the biomass in chunk shape at a heating rate of 0.3 to 5 K/s;
e) pyrolyzing the biomass in chunk shape essentially in the absence of oxygen at a temperature of 400 to 750°C for 5 to 60 minutes;
f) removing the pyrolysis gases from the reactor;
h) removing the pyrolysis coke obtained;
i) removing the pyrolysis gas.

2. The process as claimed in claim 1, wherein the pyrolysis apparatus further comprises:
vii) a dedusting unit (8) for the pyrolysis gases.

3. The process as claimed in claim 1 or 2, wherein step h) of the process further comprises the feeding of the pyrolysis gases into a dedusting unit.

4. The process as claimed in any of the preceding claims, wherein the process further comprises:
g) separating of and removing dust particles; where step h) further comprises the removing of the pyrolysis coke obtained together with the separated dust particles.

5. The process as claimed in any of the preceding claims, wherein the process further comprises:
i) providing pyrolysis oil by partial condensation of the removed pyrolysis gas.

6. The process as claimed in any of the preceding claims, wherein step e) consists of pyrolyzing the biomass in chunck shape essentially in the absence of oxygen at a temperature of 450 to 650°C, for 5 to 60 minutes.

7. The process as claimed in any of the preceding claims, wherein pyrolysis oil is obtained by partial condensation of the pyrolysis gas removed as a biphasic mixture of pyrolysis oil and water, and this biphasic mixture is separated.

8. The process as claimed in any of the preceding claims, wherein the dust particles are separated off by cyclone and/or hot gas filter.

9. The process as claimed in any of the preceding claims, wherein the pyrolysis coke is discharged under gravity.

10. The process as claimed in any of the preceding claims, wherein the separated dust particles are removed together with the pyrolysis coke.

11. The process as claimed in any of the preceding claims, wherein the feeding of the biomass in chunk shape from the bottom upward through the reactor space is effected with a conveying screw, preferably at 0.5 to 20 revolutions per minute.

12. The process as claimed in claim 11, wherein the screw pitch of the conveying screw decreases from the top downward.

13. The process as claimed in any of the preceding claims, wherein the pyrolysis gases are prepurified by the bulk of biomass in chunk shape.

14. The process as claimed in any of the preceding claims, wherein the bulk of biomass in the upper region of the reactor space has lower bulk density than in the lower region of the reactor space.

15. The process as claimed in any of the preceding claims, wherein the bulk height in the reactor space is chosen so as to achieve a residence time of the biomass within the reactor space at a temperature of 400 to 750°C, preferably 450 to 650°C, of 5 to 60 minutes.

16. The process as claimed in any of the preceding claims, wherein continuous mixing of the biomass in chunk shape is effected by means of the conveying unit for transport of the biomass in chunk shape from the bottom upward through the reactor space.

17. The process as claimed in claim 16, wherein the conveying unit is configured such that the bulk of biomass is partly mixed from the top downward, preferably in that the bulk ofbiomass can move vertically downward close to the shell surface, most preferably close to the shell surface and under gravity.

18. The process as claimed in any of the preceding claims, wherein hydrogen is obtained from the pyrolysis gas.

19. The process as claimed in claim 18, wherein water is additionally introduced.

20. A pyrolysis apparatus comprising
i) a reactor space (1) in an essentially vertical arrangement, where the reactor space is essentially cylindrical and/or essentially conical,
ii) a conveying unit (2) suitable for transporting biomass in chunk shape from the bottom upward through the reactor space so as to provide a bulk (3);
iii) a heating unit (4) for the reactor space
iv) a feed (5) for a heating medium into the heating unit from the top and a drain (6) for said heating medium, such that the heating medium is conducted in countercurrent based on the biomass;
v) an outlet (7) for the pyrolysis gases in the upper region of the reactor space;
vi) a discharge unit (9) for pyrolysis coke
wherein the conveying unit is a screw conveyor which occupies 80 to 95% of the cross-sectional area of the reactor space with reference to the inner dimensions.

21. The pyrolysis apparatus as claimed in claim 20, wherein the pyrolysis apparatus further comprises:
vii) a dedusting unit (8) for the pyrolysis gases.

22. The pyrolysis apparatus as claimed in claim 20 or 21 with external heating, wherein preferably the outer concluding area of the reactor or the outer concluding area of the reactor and the conveying unit are heated.

23. The pyrolysis apparatus as claimed in any of claims 20, 21, or 22, wherein the heating medium is fed in from the top.

24. The pyrolysis apparatus as claimed in any of claims 20 to 23, wherein the heating medium is gaseous or the heating medium is a liquid metal or a liquid metal alloy, or the heating medium is a liquid salt melt.

25. The use of the process as claimed in claims 1 to 19 and/or use of the apparatus as claimed in claims 20 to 24 for production of biocoke, activated carbon and/or charcoal.

## Revendications

1. Procédé de pyrolyse pour la fabrication de gaz de pyrolyse et de coke de pyrolyse comprenant les étapes suivantes :
a) la fourniture de biomasse présentant une teneur en eau inférieure à 30 % en poids sous forme de morceaux, dans lequel le diamètre moyen des particules D₅₀ de la biomasse granulaire est compris entre 2,0 mm et 60 mm déterminé selon ASTM E112 ;
b) la fourniture d'un dispositif de pyrolyse comprenant
i) un espace réacteur (1) agencé sensiblement verticalement, dans lequel l'espace réacteur est sensiblement cylindrique et/ou sensiblement conique,
ii) un dispositif de convoyage (2) pour transporter la biomasse sous forme de morceaux du bas vers le haut à travers l'espace réacteur ;
iii) un dispositif de chauffage (4) pour l'espace réacteur ;
iv) une alimentation (5) pour un milieu de chauffage dans l'appareil de chauffage par le haut ainsi qu'une évacuation (6) de ce milieu de chauffage de sorte que le milieu de chauffage soit guidé en contre-courant par rapport à la biomasse ;
v) une sortie (7) pour les gaz de pyrolyse dans la zone supérieure de l'espace réacteur ;
vi) un dispositif de déchargement (9) pour le coke de pyrolyse ou un dispositif de déchargement (9) pour le coke de pyrolyse et les particules de poussière séparées ;
c) l'alimentation de la biomasse sous forme de morceaux du bas vers le haut à travers l'espace réacteur (1) de sorte qu'il se produise un déversement (3) à l'intérieur de l'espace réacteur ;
d) le chauffage de la biomasse sous forme de morceaux à une vitesse de chauffage comprise entre 0,3 et 5 K/s ;
e) la pyrolyse de la biomasse sous forme de morceaux sensiblement en l'absence d'oxygène à une température de 400 à 750 °C pendant 5 à 60 minutes ;
f) l'évacuation des gaz de pyrolyse hors du réacteur ;
h) l'évacuation du coke de pyrolyse obtenu ;
i) l'évacuation du gaz de pyrolyse.

2. Procédé selon la revendication 1, dans lequel le dispositif de pyrolyse comprend en outre :
vii) un dispositif dépoussiéreur (8) pour les gaz de pyrolyse.

3. Procédé selon la revendication 1 ou 2, dans lequel l'étape h) du procédé comprend en outre l'alimentation des gaz de pyrolyse dans un dispositif de dépoussiérage.

4. Procédé selon l'une quelconque des revendications précédentes, dans lequel le procédé comprend en outre :
g) la séparation des particules de poussière et l'évacuation de celles-ci ; dans lequel l'étape h) comprend en outre l'évacuation du coke de pyrolyse obtenu avec les particules de poussière séparées.

5. Procédé selon l'une quelconque des revendications précédentes, dans lequel le procédé comprend en outre :
i) la fourniture d'huile de pyrolyse par condensation proportionnelle du gaz de pyrolyse évacué.

6. Procédé selon l'une quelconque des revendications précédentes, dans lequel l'étape e) consiste à pyrolyser la biomasse sous forme de morceaux sensiblement en l'absence d'oxygène à une température de 450 à 650 °C, pendant 5 à 60 minutes.

7. Procédé selon l'une quelconque des revendications précédentes, dans lequel l'huile de pyrolyse est obtenue par condensation proportionnelle du gaz de pyrolyse évacué sous forme de mélange biphasique d'huile de pyrolyse et d'eau et ce mélange biphasique est séparé.

8. Procédé selon l'une quelconque des revendications précédentes, dans lequel les particules de poussière sont séparées par cyclone et/ou filtre à gaz chaud.

9. Procédé selon l'une quelconque des revendications précédentes, dans lequel le charbon de pyrolyse est déchargé par gravité.

10. Procédé selon l'une quelconque des revendications précédentes, dans lequel les particules de poussière séparées sont évacuées conjointement avec le charbon de pyrolyse.

11. Procédé selon l'une quelconque des revendications précédentes, dans lequel l'alimentation de la biomasse sous forme de morceaux s'effectue de bas en haut à travers l'espace réacteur à l'aide d'une vis sans fin, de préférence à 0,5 à 20 tours par minute.

12. Procédé selon la revendication 11, dans lequel le pas de la vis sans fin diminue de haut en bas.

13. Procédé selon l'une quelconque des revendications précédentes, dans lequel les gaz de pyrolyse sont prénettoyés par le déversement de la biomasse sous forme de morceaux.

14. Procédé selon l'une quelconque des revendications précédentes, dans lequel le déversement de la biomasse présente une densité de déversement inférieure dans la zone supérieure de l'espace réacteur à celle dans la zone inférieure de l'espace réacteur.

15. Procédé selon l'une quelconque des revendications précédentes, dans lequel la hauteur de déversement dans l'espace réacteur est choisie de manière à atteindre un temps de séjour de la biomasse à l'intérieur de l'espace réacteur à une température de 400 à 750 °C, de préférence de 450 à 650 °C de 5 à 60 minutes.

16. Procédé selon l'une quelconque des revendications précédentes, dans lequel un mélange continu de la biomasse sous forme de morceaux s'effectue au moyen du dispositif de convoyage pour le transport de la biomasse sous forme de morceaux du bas vers le haut à travers l'espace réacteur.

17. Procédé selon la revendication 16, dans lequel le dispositif de convoyage est conçu de sorte que le déversement de biomasse soit mélangé de haut en bas, de préférence que le déversement de biomasse puisse se déplacer verticalement vers le bas à proximité de la surface enveloppe, de manière tout particulièrement préférée à proximité de la surface enveloppe et de manière entraînée par gravité.

18. Procédé selon l'une quelconque des revendications précédentes, dans lequel l'hydrogène est extrait du gaz de pyrolyse.

19. Procédé selon la revendication 18, dans lequel de l'eau est en outre introduite.

20. Dispositif de pyrolyse comprenant
i) un espace réacteur (1) agencé sensiblement verticalement, dans lequel l'espace réacteur est sensiblement cylindrique et/ou sensiblement conique,
ii) un dispositif de convoyage (2) adapté au transport de biomasse sous forme de morceaux du bas vers le haut à travers l'espace réacteur de sorte qu'un déversement (3) soit fourni ;
iii) un dispositif de chauffage (4) pour l'espace réacteur
iv) une alimentation (5) pour un milieu de chauffage dans l'appareil de chauffage par le haut ainsi qu'une évacuation (6) de ce milieu de chauffage de sorte que le milieu de chauffage soit guidé en contre-courant par rapport à la biomasse ;
v) une sortie (7) pour les gaz de pyrolyse dans la zone supérieure de l'espace réacteur ;
vi) un dispositif de déchargement (9) pour le charbon de pyrolyse
dans lequel le dispositif de convoyage est une vis sans fin qui occupe 80 à 95 % de la surface transversale de l'espace réacteur par rapport aux dimensions intérieures de l'espace réacteur.

21. Dispositif de pyrolyse selon la revendication 20, dans lequel le dispositif de pyrolyse comprend en outre :
vii) un dispositif dépoussiéreur (8) pour les gaz de pyrolyse.

22. Dispositif de pyrolyse selon la revendication 20 ou 21 avec chauffage externe, dans lequel la surface d'extrémité externe du réacteur ou la surface d'extrémité externe du réacteur et le dispositif de convoyage sont de préférence chauffés.

23. Dispositif de pyrolyse selon l'une quelconque des revendications 20, 21 ou 22, dans lequel le milieu chauffant est alimenté par le haut.

24. Dispositif de pyrolyse selon l'une quelconque des revendications 20 à 23, dans lequel le milieu chauffant est gazeux ou le milieu chauffant est un métal liquide ou un alliage de métaux liquides, ou le milieu chauffant est un sel liquide en fusion.

25. Utilisation du procédé selon les revendications 1 à 19 et/ou utilisation du dispositif selon les revendications 20 à 24 pour la fabrication de biocoke, de charbon actif et/ou de charbon de bois.
